# EUROPÄISCHE PATENTSCHRIFT

(11) **EP 2 699 375 B1**
(45) Veröffentlichungstag und Bekanntmachung des Hinweises auf die Patenterteilung: **01.03.2017**
(21) Anmeldenummer: 12724877.1
(22) Anmeldetag: 20.04.2012
(51) Int. Cl.: B23D 61/12

(54) **VORRICHTUNG ZUR MATERIALTRENNUNG MIT DÜNNER SCHNITTFUGE**
DEVICE FOR SEPARATING MATERIALS WHILE PRODUCING A THIN KERF
DISPOSITIF DE SÉPARATION DE MATIÈRE AVEC UNE SAIGNÉE MINCE

(30) Priorität: 20.04.2011 DE 102011002209
(43) Veröffentlichungstag der Anmeldung: 26.02.2014
(73) Patentinhaber: Simon Möhringer Anlagenbau GmbH, 97353 Wiesentheid (DE)
(72) Erfinder: MÖHRINGER, Stefan, 97353 Wiesentheid (DE)
(74) Vertreter: Geitz Truckenmüller Lucht Christ
(86) Internationale Anmeldenummer: PCT/DE2012/100112
(87) Internationale Veröffentlichungsnummer: WO 2012/143007

(56) Entgegenhaltungen:
- EP-A1- 0 982 093
- EP-A2- 0 856 373

## Beschreibung

Die Erfindung betrifft eine Vorrichtung zur Materialtrennung mit dünner Schnittfuge.

Eine solche Vorrichtung ist aus der DE 40 11 924 A1 betreffend ein Bandsägeblatt bekannt. Bei dieser Vorrichtung wird die dünne Schnittfuge dadurch erzeugt, dass sich das Bandsägeblatt von einer ansonsten im Wesentlichen gleichmäßigen Blattdicke in Richtung zu den Zahnspitzwurzeln hin verjüngt und die Zahnspitzenbreite nicht größer ist als die Dicke des Sägeblatts im Bereich der gleichmäßigen Blattdicke. Da ansonsten das Sägeblatt aber in der Schnittfuge geführt werden muss, hat es sich als zweckmäßig erwiesen, dem Sägeblatt in Schnittrichtung einen Spaltkeil nachzuführen, der die Schnittfuge aufweitet. Überdies muss der Spaltkeil im Betrieb mit Kühlkanälen versehen sein, um ein Heißlaufen der Vorrichtung zu vermeiden.

Aus dem Stand der Technik ist es ferner bekannt, Holzwerkstücke und Materialien im Zusammenhang mit der Herstellung hochwertiger Fertigprodukte wie etwa Parkettlamellen oder Fußbodendielen mittels Gatter-, Kreis- oder Bandsägen zuzuschneiden. Es handelt sich dabei in allen Fällen um eine Form der spanenden Bearbeitung bzw. spanenden Materialtrennung. Kreissägen arbeiten dabei herkömmlich mit Schnitttiefen von ca. 150 mm, während Gatter- und Bandsägen mit Schnitttiefen von ca. 300 mm Schnitttiefe arbeiten. Im Rahmen der bekannten Zuschnitte wird das Holz also im Wesentlichen zersägt. Die in diesem Zusammenhang denkbaren minimalen Schnittfugen liegen im Bereich von ca. 1,4 mm.

Diese vorbekannten Fertigungstechniken sind durchaus mit Nachteilen behaftet. Bei der Erzeugung einer üblichen Parkettlamelle mit einer Stärke von 3 mm wird ca. die Hälfte des eingesetzten Materials im Rahmen des vorbekannten Trennverfahrens auf Grund der Problematik der erheblichen Schnittfugenbreite und der nicht gerade schonenden Materialbehandlung verbraucht bzw. in Holzabfallmaterial in Form von Spänen und Sägemehl umgewandelt. Im Falle der spanenden Materialbehandlung besteht die Gefahr, dass bei der Materialbearbeitung Ausrisse entstehen, etwa beim Sägen von Ästen. Die entsprechenden Fehler müssen entweder aufwändig nachbearbeitet werden oder die entsprechend bearbeiteten Hölzer als Abfall aussortiert werden. Aus dem gleichen Grund ist es auch nicht möglich, besonders dünne Lamellen zu fertigen. Die vorbekannten Fertigungsverfahren verlangen eine Lamellenstärke von mindestens 2 mm und größer. Meistens können derartige Trennverfahren für hochwertige Hölzer nicht eingesetzt werden. In jedem Fall ist eine sehr aufwändige Vor- und Nachbereitung der behandelten Werkstücke wie etwa Dämpfen des Rohholzes im Vorfeld der Bearbeitung und Trocknen und Glätten der aufgebrachten Furniere im Nachgang der Bearbeitung erforderlich. In der Regel werden hierzu spezielle Messermaschinen eingesetzt.

Die im Übrigen üblicherweise sehr rauen Trennflächen müssen oftmals aufwändig nachbearbeitet werden.

EP 0 856 373 A2 offenbart eine Vorrichtung zur Materialtrennung mit dünner Schnittfuge, wobei ein Sägeblatt mit einer Verzahnung zur Trennung von Holz eingesetzt ist, wobei die Zähne jeweils mit einer Schnittfläche versehen sind, wobei die jeweils in Schnittrichtung aufeinander folgenden Zähne derart geschliffen sind, dass im Wechsel nacheinander je eine Schneide rechts und je eine Schneide links an den Zähnen nacheinander im Wechsel angeordnet sind, sodass die Schnittfuge von den Zähnen jeweils im Wechsel an der rechten und linken Schnittkante bearbeitet wird.

Ausgehend von diesem Stand der Technik soll eine neuartige Vorrichtung zur Materialtrennung, insbesondere von Hölzern, entwickelt werden, bei denen der Ressourcenverbrauch reduziert ist und im Übrigen auch der Vor- und Nachbearbeitungsaufwand deutlich geringer ist.

Die Lösung dieser Aufgabe gelingt mittels einer Vorrichtung gemäß Hauptanspruch. Vorteilhafte Ausgestaltungen der Erfindung können den abhängigen Ansprüchen 2 bis 16 entnommen werden.

Im Rahmen der erfindungsgemäßen Lösung wird ein vorzugsweise endloses Schleif-Sägeblatt mit einer Mikroverzahnung zur Materialtrennung eingesetzt. Die Mikroverzahnung besitzt eine vergleichsweise geringe Schnitttiefe, sodass die Materialtrennung zwar spanend erfolgt, aber der Abrieb in der Schnittfuge eher keinen Span, sondern ein Schnittmehl erzeugt. Der wesentliche Vorteil der Trennung liegt jedoch insbesondere darin, dass die Schnittfuge deutlich verkleinert ist, weil die Verzahnung in Schnittrichtung im Wechsel rechts- und linksseitig zur Ausbildung einer Mikro-Schneide angeschliffen und somit die Schnittfuge in Schnittrichtung im Wechsel und damit während desselben Schnittvorganges, also gleichzeitig rechts und linksseitig, bearbeitet wird. Diese Mikroverzahnung erlaubt es auch, mit einem Sägeblatt mit deutlich reduzierter Stärke zu arbeiten. Im Ergebnis kann daher die Schnittfuge deutlich schmaler ausgebildet sein und der resultierende Materialverlust in Folge der Materialtrennung deutlich reduziert werden. Die Schnittfläche ist deutlich feiner bearbeitet und bildet meist bereits eine verleimfähige Oberfläche, da es sich faktisch eher um eine geschliffene Oberfläche handelt, die bei üblichen Anwendungen keine Nachbearbeitung verlangt. Im Übrigen können Lamellen mit einer Stärke ab 0,2 mm gefertigt werden, also z. B. Furniere mit der neuartigen Vorrichtung geschnitten werden.

In vorteilhafter Weiterbildung sind die Mikrozähne in Schnittrichtung im Wechsel gegeneinander verschränkt ausgebildet, sodass ein geschränktes Endlos-Sägeblatt gebildet ist. Hierdurch ist die Schnittfuge gegenüber dem Sägeblatt verbreitert, sodass ein Festsetzen des Endlos-Sägeblatts im Betrieb ausgeschlossen ist.

Erfindungsgemäß beträgt die Zahnteilung der Mikroverzahnung 0,5 bis 2 mm und der Zahngrund hat eine Tiefe von ≤ 1,5 mm.

In vorteilhafter Ausgestaltung der Erfindung wird die neuartige Mikroverzahnung des Schleif-Sägeblatts in Verbindung mit einem veränderten Schnittwinkel eingesetzt, sodass die Mikroverzahnung gegenüber dem Sägeblatt derart angestellt ist, dass sich ein Schnittwinkel von vorzugsweise 40° bis 60° gegenüber der Oberfläche des zu trennenden Materials ergibt, während bei den eingehend dargestellten vorbekannten Verfahren ein Schnittwinkel von ca. 90° üblich ist.

Ein weiterer Beitrag zur schonenden Materialtrennung und insbesondere zur Realisierung dünner Schnittfugen besteht darin, dass der Überstand der Zahnschneiden der Mikrozähne gegenüber dem Sägeblatt nur wenige Zehntel Millimeter, vorzugsweise von 1/10 mm, beträgt. Geht man von einer ebenfalls reduzierten Sägeblattstärke von 0,3 mm aus, so ergibt sich bei dieser Ausgestaltung eine minimale Schnittfuge von 0,4 mm Breite, die mit der erfindungsgemäßen Vorrichtung im Unterschied zum Stand der Technik realisiert werden kann.

Auf Grund der bereits erwähnten geringen Sägeblattstärke ist es sinnvoll, die Sägeblattenden zur Erzeugung eines Endlos-Sägebandes anders zu verbinden als bisher, weil auf Grund der geringen Materialstärke eine herkömmliche Schweißnaht die entstehenden Spannkräfte nicht halten könnte. Die Sägeblattenden werden daher bei der erfindungsgemäßen Vorrichtung zunächst formschlüssig miteinander verzahnt, wobei sich in diesem Zusammenhang eine Schwalbenschwanz-Verzahnung bewährt hat, und anschließend zur Ausbildung eines Stoffschlusses verschweißt. Hierbei ist ein Laser-Schweißverfahren zu bevorzugen, da eine besonders hoch belastbare Verbindung hergestellt werden muss.

Um eine weitgehend schleifende Materialtrennung zu ermöglichen ist eine sehr enge Anordnung der bereits erwähnten Mikroverzahnung erforderlich. Der übliche Abstand zwischen den Zähnen der Mikroverzahnung beträgt weniger als 1 mm. Dies stellt auch neue Anforderungen an die im laufenden Prozess erforderliche Reinigung des Sägeblatts. Herkömmliche Bandsägen werden einfach abgesaugt, wobei die bei der Materialtrennung entstehenden Sägespäne nach Austritt aus der Schnittfuge des zu trennenden Materials über entsprechende Saugkanäle abgezogen werden. Es verbleibt lediglich ein Restbestand durch Verwirbelung und statische Anhaftung an den bearbeiteten Hölzern haften, sodass der Maschinenraum zusätzlich in regelmäßigen Abständen grundgereinigt wird. Dieses Verfahren ist bei der nunmehr eingesetzten Mikroverzahnung nicht ausreichend. Im Unterschied zur herkömmlichen Materialtrennung entsteht anstelle von Sägespänen eher ein Säge- bzw. Schleifmehl In der engen Verzahnung würde in dem eng bemessenen, zwischen den Zähnen angeordneten Zahngrund ein zu großer Anteil an Sägemehl verbleiben, was beim erneuten Schneiden zu einer Erwärmung der Sägevorrichtung und letztlich zur Zerstörung der Mikroverzahnung führen würde. Es hat sich in diesem Zusammenhang bewährt, wenn anstatt der bereits erwähnten Saugkanäle der Vorrichtung eine Anblas-Vorrichtung derart zugeordnet ist, dass die Mikroverzahnung beim Austritt aus der Schnittfuge des zu trennenden Materials mit einem Wasser-Luft-Gemisch derart beaufschlagt und hierdurch das anhaftende Sägemehl zuverlässig entfernt werden kann.

In weiterer Ausgestaltung der Erfindung ist es überdies sinnvoll, wenn auch am Sägeblattrücken eine weitere Anblas-Vorrichtung angeordnet ist, die ebenfalls ein entsprechendes Wasser-Luft-Gemisch vorzugsweise mit hohem Druck in die Schnittfuge einpresst, um diese ebenfalls von den Resten der weitgehend schleifenden Materialtrennung zu befreien.

In vorteilhafter Ausgestaltung der Erfindung sind die beiden Anblas-Vorrichtungen mit einer gemeinsamen Versorgungseinheit und/oder Steuereinheit verbunden, sodass die Beschickung der Anblas-Vorrichtungen mit dem bereits erwähnten Wasser-Luft-Gemisch und der Druckaufbau synchronisiert und mit gemeinsamen Einheiten erfolgen kann.

In weiterer Ausgestaltung ist in Abstrahlrichtung des auf dem Sägeblatt bzw. auf das zu trennende Material aufgebrachten Wasser-Luft-Gemischs eine Auffang-Vorrichtung zur Aufnahme des Wasser-Sägemehls und -Holzabraumgemischs angeordnet, wobei der Auffang-Vorrichtung in Abfließrichtung des Wasser-Sägemehl-Gemischs idealerweise ein Filterelement zur Vorreinigung nachgeschaltet ist.

In weiterer Verbesserung der Erfindung ist auch die Werkstückführung an die mit dem Verfahren realisierten höheren Schnittgenauigkeiten und erreichbaren geringeren Toleranzen anzupassen. In diesem Zusammenhang hat es sich bewährt, wenn einem üblichen Wand- oder Kettenförderer zusätzlich Vakuumdüsen derart zugeordnet sind, dass das jeweils zu bearbeitende Werkstück mittels eines Vakuums in der Bearbeitungsebene fixiert und anschließend relativ zum Sägeblatt bewegt wird. Durch den mittels des Vakuums realisierten Anpressdruck ist eine plane Auflage des Werkstückes selbst bei geringeren Materialstärken sichergestellt. Eine entsprechende Vakuumführung ist beispielsweise bei der Herstellung von Furnieren sehr hilfreich.

In weiterer Ausgestaltung ist dem Rollen- oder Kettenförderer ein Schwenkmechanismus zugeordnet, über den sichergestellt ist, dass die zu trennenden Werkstücke dem Bandsägeblatt derart zugeführt sind, dass der Eintrittswinkel der Mikroverzahnung in das zu trennende Werkstück in einem Bereich von 60° bis 90° stufenlos verstellbar ist.

Für den Fall, dass das erfindungsgemäße Sägeblatt mit der Mikroverzahnung als Endlosband ausgestaltet ist, wird dieses Endlosband über zwei voneinander beabstandete Bandsägerollen geführt, wobei zumindest eine der beiden Bandsägerollen angetrieben ist.

Die bereits erwähnte höhere Fertigungsgenauigkeit erfordert dabei allerdings, dass die Relativposition der Bandsäge zu den Bandsägerollen mittels einer Sensorik optisch oder haptisch überwacht wird und in Abhängigkeit von diesem Messergebnis nach einem Ist-Soll-Wert-Vergleich mittels einer entsprechenden Anstell-Vorrichtung die Neigung wenigstens einer Bandsägerolle selbsttätig nachführbar ist.

Im Übrigen hat es sich bewährt, wenn der Vorlauf des Sägebandes überwacht ist bzw. die Bandförderung mit einer Rücklaufsicherung versehen ist. Auf Grund der geringen Sägezahntiefe von einigen wenigen Millimetern, vorzugsweise von einem Millimeter, würde ein Zurücklaufen des Sägebandes um nur einen Millimeter bereits den jeweils betroffenen Minizahn beschädigen. Dementsprechend sind entsprechende Sicherungsvorkehrungen erforderlich.

In alternativer Ausgestaltung kann das Sägeband mit der Mikroverzahnung auch in einem Sägerahmen vertikal eingespannt und in einem sogenannten Sägegatter genutzt werden.

Die Erfindung wird nachstehend anhand eines in der Zeichnung nur schematisch dargestellten Ausführungsbeispiels näher erläutert.

Es zeigen:
- Figur 1: eine Vorrichtung zur Materialtrennung in einer Übersichtsdarstellung,
- Figur 2: ein Sägeblatt der Vorrichtung gemäß Figur 1 in einer Detailansicht,
- Figur 3: eine Anblas-Vorrichtung der Vorrichtung gemäß Figur 1 in einer Detailansicht,
- Figur 4: die Materialzuführung der Vorrichtung gemäß Figur 1 in einer Detailansicht,
- Figur 5: einen Ausschnitt des Sägeblatts in einer Seitenansicht und
- Figur 6: eine in Figur 5 mit VI, VI' bezeichnete, um die Relativposition im Schnittmaterial ergänzte Schnittansicht.

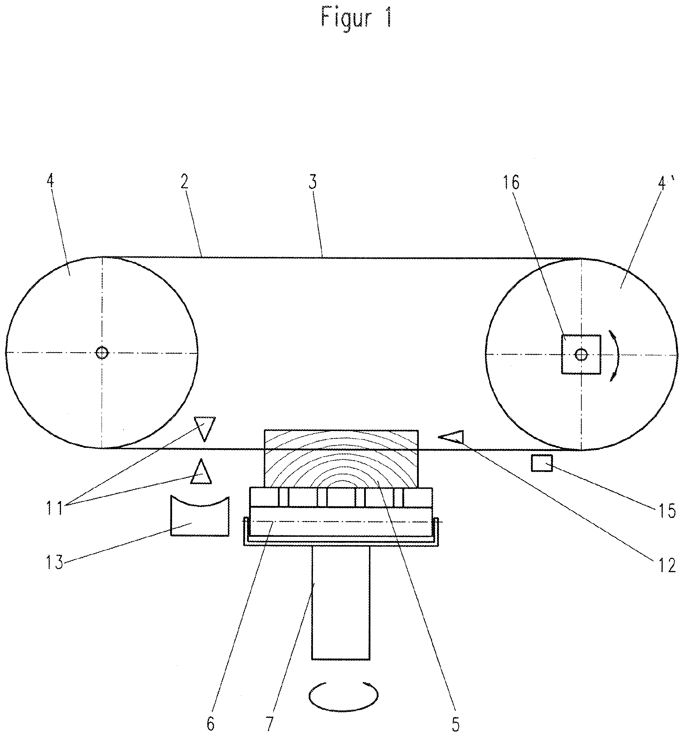

Die Darstellung in Figur 1 zeigt eine Vorrichtung zur Materialtrennung 1 in einem auf den ersten Blick herkömmlichen Aufbau. Ein Schleif-Sägeblatt 2 mit einer Mikroverzahnung 3 ist über zwei voneinander entfernt angeordnete Bandsägerollen 4, 4' geführt, wobei eine der beiden Bandsägerollen 4, 4' als Antriebsrolle ausgebildet ist. Diese Bandsägerolle 4 oder 4' ist mit einem elektromotorischen Antrieb in hier nicht weiter interessierender Weise über eine Antriebswelle wirkverbunden.

Der Bandsäge können Werkstücke 5, im vorliegenden Beispiel Holzwerkstücke, mittels eines Bandförderers 6 zugeführt werden. Dabei ist dem Bandförderer 6 eine Schwenkvorrichtung 7 zugeordnet, um den Neigungswinkel des Beschickungsbandes 10 und damit den Eintrittswinkel der Mikroverzahnung 3 in das zu trennende Werkstück 5 einzustellen.

Im Übrigen kann der Übersichtsdarstellung gemäß Figur 1 entnommen werden, dass im Bereich des bestimmungsgemäßen Austritts der Mikroverzahnung 3 aus der Schnittfuge des zu bearbeitenden Werkstücks 5 eine erste Anblas-Vorrichtung 11 angeordnet ist, mit der ein Wasser-Luft-Gemisch mit hohem Druck auf das aus dem Werkstück 5 austretende Sägeblatt 2, insbesondere auf dessen Mikroverzahnung 3, aufgebracht werden kann, um dieses von anhaftenden Holzspänen zu befreien. Zusätzlich ist auch im Bereich des Sägeblattrückens des Sägeblatts 2 eine zweite Anblas-Vorrichtung 12 angeordnet, mit der ebenfalls ein Wasser-Luft-Gemisch mit hohem Druck in die soeben gefertigte Schnittfuge des zu bearbeitenden Werkstücks 5 eingepresst werden kann, um auch die Schnittfuge von Holz- und Sägespänen zu befreien.

Darüber hinaus ist in diesem Bereich eine Auffang-Vorrichtung 13 für das aus der Schnittfuge austretende und von der Mikroverzahnung 3 abgestrahlte Wasser-Sägemehl und Sägespäne-Gemisch angeordnet. Dabei ist der Auffang-Vorrichtung 13 eine Filtervorrichtung zur Vorreinigung des Gemischs in Abflussrichtung des aufgefangenen Gemischs nachgeschaltet.

Wie ebenfalls aus der Übersichtsdarstellung ersichtlich, ist einer der Bandsägerollen 4, 4' ein optischer Sensor 15 zugeordnet, mit dem die Relativposition des umlaufenden Schleif-Sägeblatts 2 zu der jeweiligen Bandsägerolle 4, 4' überwacht wird. Das Messergebnis des Sensors 15 wird einer in der Übersichtsdarstellung nicht weiter dargestellten Regelungs- und Steuerungseinheit übermittelt, die wiederum mit einer Anstell-Vorrichtung 16 verbunden ist, über die die Neigung der Bandsägerolle 4, 4' in Abhängigkeit von einem Ist-Soll-Wert-Vergleich in ihrer Neigung verstellbar ist.

In alternativer, hier aber nicht dargestellter Ausgestaltung, kann die Anstell-Vorrichtung 16 auch mit einer Rollenführung zur Führung des Schleif-Sägeblatts 2 zusammenwirken, wobei mittels schwenkbarer Rollen die Relativposition des Sägeblatts 2 zu den Bandsägerollen 4, 4' ebenfalls in Abhängigkeit von einem Ist-Soll-Wert-Vergleich verstellbar ist.

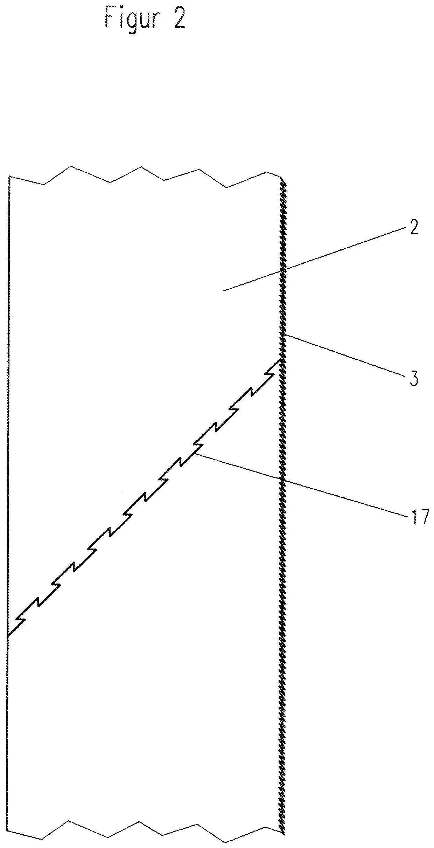

Figur 2 zeigt das Endlos-Schleif-Sägeblatt 2 der Vorrichtung zur Materialtrennung 1 in einer Detailansicht. Gemäß dieser Detailansicht ist das Endlos-Schleif-Sägeblatt 2 im Unterschied zu herkömmlichen Verzahnungen mit einer Mikroverzahnung 3 versehen, die sich gegenüber dem Stand der Technik dadurch auszeichnet, dass die Mikrozähne lediglich eine Tiefe von 0,5 bis 2 mm, im vorliegenden Ausführungsbeispiel von ca. 1 mm, aufweisen. Im Übrigen ist die Verzahnung sehr eng ausgeführt, sodass die Zahnteilung zwischen den Mikrozähnen lediglich ≤ 1,5 mm beträgt. Der übliche Abstand zwischen zwei Zähnen beträgt in der Regel ansonsten zwischen 10 und 25 mm. Auf Grund der erwähnten geringen Zahntiefe und des geringen Abstandes zwischen den Zähnen wird das zu bearbeitende Material nicht durch ein Sägeverfahren, sondern eher schleifend getrennt.

Dies hat den Vorteil einer wesentlich schonenderen Behandlung des Materials mit der Folge, dass die Schnittkanten in der Regel nicht nachbearbeitet werden müssen und gegebenenfalls sofort weiterbearbeitet, d. h. insbesondere verleimt werden können. Selbst die ansonsten beim Sägeprozess üblichen Ast-Ausrisse können hier vermieden werden, weil bei dem annähernd schleifenden Trennverfahren die Astfläche geschnitten und ansonsten unbeschädigt in dem zu trennenden Werkstück 5 verbleibt.

Auch die Stammblattstärke des Schleif-Sägeblatts 2 liegt je nach gewünschter Schnitttiefe, Vorschubgeschwindigkeit und Holzhärte bei nur 0,3 mm anstelle der ansonsten üblichen 0,7 bis 1,4 mm. Entsprechend ist auch der Überstand der Schneiden gegenüber dem Schleif-Sägeblatt 2 nur 1/10 mm. Ansonsten beträgt der Überstand üblicherweise 3/10 mm bis 5/10 mm.

Die Folge dieser Abmessungen ist eine extrem dünne Schnittfuge. Die minimale Schnittfugenbreite bei dem neuartigen Trennverfahren beträgt lediglich 0,4 mm, während die aus dem Stand der Technik bekannte minimale Schnittfuge bislang bei 1,4 mm lag. Dies stellt einen erheblichen Beitrag zur Einsparung dar, weil der Materialverlust entsprechend reduziert ist. Ein weiterer Vorteil der vorstehend beschriebenen schonenden Materialtrennung besteht darin, dass auf diese Weise auch dünnere Werkstücke 5 bearbeitet werden können. So können mit dem neuartigen Verfahren dünne Lamellen ab einer Stärke von 0,2 mm bearbeitet werden. Im bisherigen Stand der Technik konnten lediglich Lamellen ab einer Stärke von 2 mm bearbeitet werden, wobei die Schnitttoleranzen in einem Bereich von 0,1 bis 0,2 mm lagen. Mit dem neuartigen Verfahren werden Schnitttoleranzen im Bereich von 0,02 mm erreicht. Im Ergebnis können im Unterschied zum Stand der Technik also auch Lamellen in Furnierstärke bearbeitet werden.

Allerdings erfordert das neuartige Schleif-Sägeblatt 2 ein anderes Herstellverfahren. Auf Grund der bereits erwähnten geringen Stammblattstärke von nur 0,3 mm können die Stirnseiten der Schleif-Sägeblätter zur Herstellung eines EndlosBandes nicht mehr einfach stumpf verschweißt werden. Eine solche Schweißnaht würde den beim Trennprozess entstehenden Spankräften nicht standhalten.

Das neuartige Sägeblatt gemäß Figur 2 wird daher zunächst mittels einer formschlüssigen Verzahnung, im vorliegenden Ausführungsbeispiel einer Schwalbenschwanz-Verzahnung 17, zusammengefügt und anschließend diese Verbindung mittels Laser stoffschlüssig verschweißt. Selbstverständlich sind auch andere formschlüssige Verzahnungen zum Zusammenfügen der Stirnseiten der Schleif-Sägeblätter 2 denkbar. Die vorstehend beschriebene Verbindung ist deutlich höher belastbar als die bisher bekannten Schweißverbindungen der Sägeblattenden. Bei dem eingesetzten Laser-Schweißverfahren ist im Übrigen zu beachten, dass nach Möglichkeit jeglicher Materialauftrag im Verbindungsbereich weitgehend vermieden wird, da entsprechende Überstände sich ansonsten auf die Schnittoberfläche des zu trennenden Werkstücks 5 auswirken würden.

Im Übrigen unterscheidet sich die Mikroverzahnung 3 von der bisher bekannten üblichen Verzahnung nicht nur durch die Abmessungen, vorzugsweise auch durch den Anstellwinkel der Schnittfläche in Bezug zu der zu bearbeitenden Materialoberfläche. Bei der bisher bekannten sägenden Bearbeitung trafen die Schnittflächen zumindest annähernd in einem 90°-Winkel auf das zu trennende Material, während die Mikroverzahnung 3 in einem Schneidwinkel von zumindest annähernd 45° auf die Materialoberfläche auftrifft.

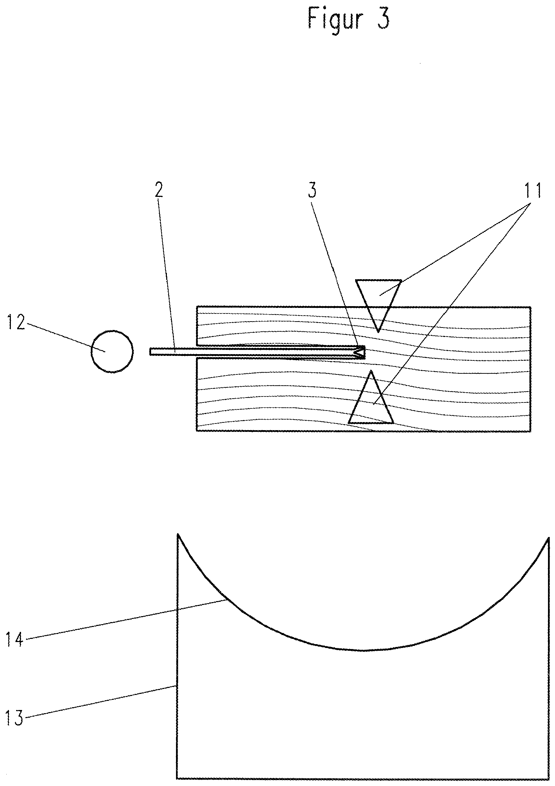

In einer weiteren Detailansicht ist in Figur 3 der Austrittsbereich des Endlos-Schleif-Sägeblatts 2 aus der Schnittfuge des zu bearbeitenden Werkstücks 5 dargestellt. Diesem Austrittsbereich ist eine erste Anblas-Vorrichtung 11 zugeordnet, mit der ein Wasser-Luft-Gemisch mit entsprechend hohem Druck auf das Endlos-Schleif-Sägeblatt 2, insbesondere die Mikroverzahnung 3, aufgebracht wird, um dieses von dem zerspanten Schnittmaterial zu trennen, das insbesondere im Bereich des zwischen den Zahnspitzen liegenden Zahngrundes anhaftet. Die in der Verzahnung verbleibenden Sägemehlreste führen ansonsten bei weiteren Schneidvorgängen zu einem sofortigen Erwärmen und gegebenenfalls auch zur Zerstörung der Zähne der Mikroverzahnung 3. Die Blattreinigung ist bei herkömmlichen Sägeblättern deutlich unkritischer, da der zwischen den Zähnen liegende Zahngrund, wie bereits erwähnt wurde, deutlich größer ist und somit leichter gereinigt werden kann bzw. auch weniger Material in diesem Bereich anhaftet. Daher genügt es im Stand der Technik, die Wandsägen abzusaugen.

Es hat sich im Übrigen bewährt, wenn eine weitere Anblas-Vorrichtung 12 im Bereich des Sägeblattrückens angeordnet ist, die ebenfalls ein Wasser-Luft-Gemisch mit hohem Druck in die Schnittfuge bläst, um den verbliebenen Sägestaub des Werkstücks 5 zu entfernen.

Das durch die beschriebene Blatt- und Schnittflächenreinigung entstandene Wasser-Staubgemisch wird mittels einer diesem Bereich zugeordneten Auffang-Vorrichtung 13 aufgefangen und kanalisiert, wobei der Auffang-Vorrichtung 13 ein Filterelement in Abflussrichtung nachgeschaltet ist, um das Wasser zu reinigen. Idealerweise kann das gereinigte Wasser erneut dem Reinigungsverfahren zugeführt werden, während das aufgefangene Sägemehl-Gemisch entsorgt bzw. weiterverarbeitet wird. Die aus dem Stand der Technik bekannte Absaugung der Bandsäge kann bei diesem Verfahren vollständig entfallen. Das neuartige Verfahren der Bandreinigung hat den Vorteil, dass der Maschinenraum im Unterschied zu dem Absaugverfahren im Übrigen sauber bleibt und nicht in regelmäßigen Abständen gereinigt werden muss. Im Übrigen ist auch das entstandene Schnittgut besser gereinigt, als aus dem Stand der Technik bekannt.

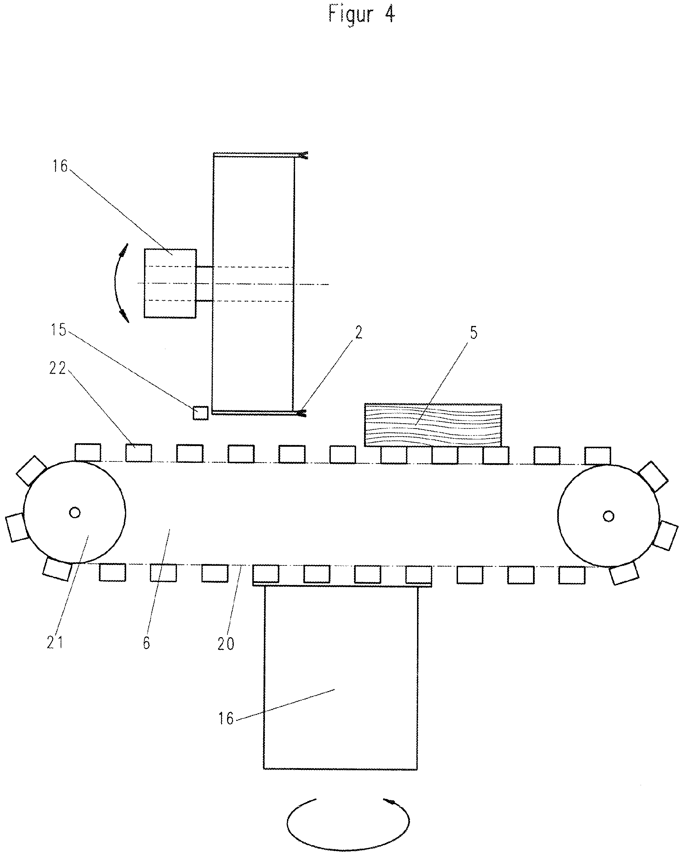

In einer weiteren Detailansicht zeigt Figur 4 die Materialzuführung zu der Sägevorrichtung. Das Material wird dabei über einen zunächst herkömmlichen Bandförderer 6 dem Sägeblatt 2 zugeführt. Für den Vortrieb des Förderbandes 20 sorgen elektromotorisch angetriebene Förderrollen 21. Aus dem Stand der Technik ist es bekannt, das Werkstück 5 mittels entsprechenden Führungselementen zumindest im Bereich des Schleif-Sägeblatts 2 während des Schnittvorgangs zu führen. Im Unterschied hierzu sind dem Förderband 20 zumindest im Bereich des Schleif-Sägeblatts 2 Vakuum-Düsen 22 zugeordnet, über die mittels Unterdruck das Werkstück 5 angesaugt und fixiert wird. Der Vorteil der Vakuumfixierung besteht darin, dass etwaige Unebenheiten und Verwerfungen des Werkstücks 5 durch das Ansaugen ausgeglichen werden, indem das Werkstück 5 plan angesaugt wird. Der Einsatz der Vakuum-Düsen 22 hat sich insbesondere in Verbindung mit besonders dünnen Werkstücken 5, etwa bei der Furnier-Bearbeitung, bewährt.

Wie ebenfalls aus der Detailansicht in Figur 4 ersichtlich, ist dem Förderband 20 zusätzlich eine Anstell-Vorrichtung 16 zugeordnet, wobei über den Verlauf des Förderbandes 20 zusätzliche Anstell-Vorrichtungen 16 analog angeordnet sein können. Mittels der Anstell-Vorrichtung 16 kann das Förderband 20 stufenlos in seiner Neigung verstellt werden, um hierdurch den Eintrittswinkel der Mikroverzahnung 3 in das Förderband 20 zu variieren. Üblicherweise kann der Eintrittswinkel in einem Bereich zwischen 60° bis 90° durch entsprechende Verschwenkung des Förderbandes 20 variiert werden. Der stumpfere Eintrittswinkel reduziert die Belastung des Schleif-Sägeblatts 2 und verbessert damit die Präzision der Schnittführung.

Im Übrigen ist dem Förderband 20 eine Rücklaufsicherung zugeordnet. Auf Grund der extrem engmaschigen Verzahnung könnte bereits ein Rücklauf von wenigen Millimetern die eingesetzten Minizähne beschädigen.

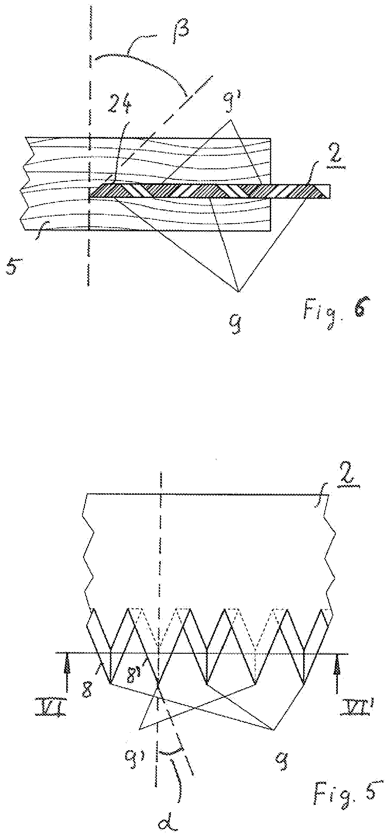

Figur 5 zeigt in einer Detailansicht das Schleif-Sägeblatt 2 in einer Seitenansicht, aus der sich zunächst ergibt, dass die in Schnittrichtung aufeinander folgenden Mikrozähne 8, 8'der Mikroverzahnung 3 gegeneinander verschränkt ausgebildet sind. Das Schleif-Sägeblatt 2 ist somit ein geschränktes Sägeblatt. Im Übrigen wechseln die Schnittseiten der aufeinander folgenden Mikrozähne 8, 8', so dass die einen Mikrozähne 8 auf der einen Seite einer Schnittfuge 24 und die jeweils nachfolgenden anderen Mikrozähne 8' auf der anderen Seite derselben Schnittfuge 24 angreifen, wie aus der Schnittansicht gemäß Figur 6 hervorgeht. Zum besseren Verständnis zeigt diese Schnittansicht den Eingriff des Schleif-Sägeblatts (2) in das zu bearbeitende Werkstück 5 in einer Schnitt-Draufsicht.

Wie ebenfalls aus Figur 5 ersichtlich setzt die Mikroverzahnung in einem Spanwinkel α, der zwischen 5° und 30° liegt, an der Oberfläche des Schnittgutes an. Dabei ist der Spanwinkel zwischen der Oberfläche der Schneidfläche des jeweiligen Mikrozahns 8, 8'und einer Normalen zu der zu bearbeitenden Oberfläche der angrenzenden Schnittfuge 24 eingeprägt. Der Spanwinkel α ist in Fig. 5 durch gestrichelte Hilfslinien verdeutlicht. Es handelt sich dabei um einen der Normalen in Schnittrichtung vorauseilenden Winkel, während der Spanwinkel bei einer herkömmlichen Verzahnung dieser Normalen nacheilt und demgegenüber vergleichsweise stumpf zischen 6° und 15° ausfällt.

In der Schnittansicht gemäß Fig. 6 ist hingegen der Schnittwinkel β zwischen zwei gestrichelten Hilfslinien eingetragen, wobei der Schnittwinkel β der Winkel ist, den die Mikrozähne 8, 8' in der Schnittansicht gemäß Fig.6 relativ zur Schnittfugenkante in Schnittrichtung aufweisen. Der Schnittwinkel bei einer herkömmlichen Verzahnung liegt üblicherweise zumeist bei 90°. Bei der erfindungsgemäßen Verzahnung liegt er, wie auch in Fig. 6 dargestellt, zwischen 40° und 60°.

Vorstehend ist somit eine neuartige Vorrichtung zur Materialtrennung 1, insbesondere von Holzwerkstücken 5, beschrieben, die sich gegenüber dem Stand der Technik dadurch auszeichnet, dass anstelle des bisher bekannten spanenden Sägeverfahrens ein schonendes Schleif-Sägeverfahren eingesetzt wird. Das neuartige Verfahren ermöglicht durch den Einsatz einer speziellen Mikroverzahnung 3 und eines neuartigen Schleif-Sägeblatts 2 mit deutlich geringerer Stärke extrem dünne Schnittfugen, die mit hoher Genauigkeit gefertigt werden können, sodass hierdurch der Verlust des eingesetzten Materials erheblich reduziert wird. Darüber hinaus ermöglicht die schonendere Materialbearbeitung die Behandlung von Werkstücken 5 geringer Stärke bis hin zur Furnierbearbeitung. Die beschriebenen Vorteile erfordern allerdings eine neuartige Herstellung des eingesetzten Sägeblatts 2, eine neuartige Bandreinigung und eine hochwertige Sägeblattführung, um die deutlich empfindlichere Mikroverzahnung 3 vor einer Zerstörung durch Auflaufen auf die Bandsägerollen 4, 4' oder durch einen möglichen Sägeblattrücklauf zu vermeiden.

### BEZUGSZEICHENLISTE

- 1: Vorrichtung zur Materialtrennung
- 2: Schleif-Sägeblatt
- 3: Mikroverzahnung
- 4, 4': Bandsägerollen
- 5: Werkstück
- 6: Bandförderung
- 7: Schwenkvorrichtung
- 8, 8': Mikrozähne
- 9, 9': Schneide der Mikrozähne
- 10: Beschickungsband
- 11: erste Anblas-Vorrichtung
- 12: zweite Anblas-Vorrichtung
- 13: Auffang-Vorrichtung
- 14: Filter
- 15: Sensor
- 16: Anstell-Vorrichtung
- 17: Schwalbenschwanz-Verzahnung
- 20: Förderband
- 21: Förderrolle
- 22: Vakuum-Düsen
- 24: Schnittfuge
- α: Spanwinkel
- β: Schnittwinkel

## Patentansprüche

1. Vorrichtung zur Materialtrennung mit dünner Schnittfuge, **dadurch gekennzeichnet, dass** ein, vorzugsweise endloses, Schleif-Sägeblatt (2) mit einer Mikro-Verzahnung (3) zur Materialtrennung, insbesondere von Holz, eingesetzt ist, wobei die Mikrozähne (8, 8') der Mikroverzahnung (3) jeweils mit einer Schnittfläche versehen sind, wobei die jeweils in Schnittrichtung aufeinander folgenden Mikrozähne (8, 8') der Mikroverzahnung (3) derart geschliffen sind, dass im Wechsel nacheinander je eine Schneide (9) rechts und je eine Schneide (9') links an den Mikrozähnen (8, 8') nacheinander im Wechsel angeordnet sind, sodass die Schnittfuge (24) von den Mikrozähnen (8, 8') jeweils im Wechsel an der rechten und linken Schnittkante bearbeitet wird, wobei die Mikroverzahnung (3) des Schleif-Sägeblatts (2) mit Mikrozähnen (8, 8') versehen ist, deren Zahnteilung 0,5 bis 2 mm beträgt und deren durch den zwischen den Mikrozähnen (8, 8') liegenden Zahngrund definierte Zahnhöhe ≤ 1,5 mm beträgt.

2. Vorrichtung nach Anspruch 1, **dadurch gekennzeichnet, dass** das Schleif-Sägeblatt (2) derart geschränkt ausgebildet ist, dass die in Schnittrichtung des Schleif-Sägeblatts (2) aufeinander folgenden Mikrozähne (8, 8') der Mikroverzahnung (3) gegeneinander verschränkt so angeordnet sind, dass die Mikrozähne (8, 8') im Wechsel rechts und links über das Schleif-Sägeblatt (2) überstehen.

3. Vorrichtung nach einem der vorhergehenden Ansprüche, **dadurch gekennzeichnet, dass** die Mikrozähne (8, 8') der Mikroverzahnung (3) gegenüber dem Schleif-Sägeblatt (2) derart angestellt sind, dass im Betriebszustand ein stumpfer Schnittwinkel (β) von vorzugsweise 40° bis 60° gegenüber der Oberfläche des zu trennenden Materials eingestellt ist.

4. Vorrichtung nach einem der vorhergehenden Ansprüche, **dadurch gekennzeichnet, dass** der Überstand der Zahnschneiden (9, 9') der Mikroverzahnung (3) gegenüber dem Schleif-Sägeblatt (2) nur einige wenige Zehntel Millimeter, vorzugsweise 1/10 mm, beträgt.

5. Vorrichtung nach einem der vorhergehenden Ansprüche, **dadurch gekennzeichnet, dass** die Sägeblattstärke zwischen 0,1 und 0,5 mm beträgt.

6. Vorrichtung nach Anspruch 5, **dadurch gekennzeichnet, dass** die Sägeblattenden stirnseitig mittels einer Verzahnung, vorzugsweise mittels einer Schwalbenschwanz-Verzahnung (17), miteinander, vorzugsweise mittels einer Laser-Schweißnaht, stoffschlüssig verbunden sind.

7. Vorrichtung nach einem der vorhergehenden Ansprüche, **dadurch gekennzeichnet, dass** im bestimmungsgemäßen Einbauzustand dem Austritt der Mikroverzahnung (3) aus der Schnittfuge (24) des zu trennenden Materials eine Anblas-Vorrichtung (11) derart zugeordnet ist, dass die Mikroverzahnung (3) mittels eines Wasser-Luft-Gemischs beaufschlagt wird.

8. Vorrichtung nach Anspruch 7, **dadurch gekennzeichnet, dass** dem Sägeblattrücken des Schleif-Sägeblatts (2) eine weitere Anblas-Vorrichtung (12) derart zugeordnet ist, dass ein Wasser-Luft-Gemisch, vorzugsweise mit hohem Druck, in die Schnittfuge (24) des zu trennenden Materials pressbar ist.

9. Vorrichtung nach Anspruch 7 oder 8, **dadurch gekennzeichnet, dass** den Anblas-Vorrichtungen (11, 12) eine gemeinsame Steuereinheit und/oder Versorgungseinheit und Pumpeinheit zur Beschickung mit dem Wasser-Luft-Gemisch zugeordnet ist/sind.

10. Vorrichtung nach einem der vorhergehenden Ansprüche 7 bis 9, **dadurch gekennzeichnet, dass** in Abstrahlrichtung des mittels der Anblas-Vorrichtung/en (11, 12) aufgebrachten Wasser-Luft-Gemischs eine Auffang-Vorrichtung (13) zur Aufnahme eines Wasser-Sägemehl-Gemischs angeordnet ist, wobei dieser Auffang-Vorrichtung (13) eine Filtereinheit nachgeschaltet ist.

11. Vorrichtung nach einem der vorhergehenden Ansprüche, **dadurch gekennzeichnet, dass** dem Schleif-Sägeblatt (2) mit der Mikroverzahnung (3) umfassenden Sägewerk ein Band- oder Kettenförderer zur Zufuhr des zu trennenden Materials zugeordnet ist, wobei der Band- oder Kettenförderer zusätzlich mit Vakuum-Düsen (22) derart versehen ist, dass das jeweils zu bearbeitende Werkstück (5) mittels eines Unterdrucks fixierbar und anschließend mittels des Band- oder Kettenförderers relativ zum Sägeblatt (2) bewegbar ist.

12. Vorrichtung nach Anspruch 11, **dadurch gekennzeichnet, dass** der Rollen- oder Kettenförderer jeweils ein Beschickungsband (10) zum Transport des zu trennenden Materials aufweist, wobei diesem Beschickungsband (10) ein Schwenkmechanismus zur Verstellung des Neigungswinkels des Beschickungsbandes (10) derart zugeordnet ist, dass der Eintrittswinkel der Mikro-Verzahnung (3) in das zu bearbeitende Werkstück (5) in einem Bereich von 60° bis 90° stufenlos verstellbar ist.

13. Vorrichtung nach einem der vorhergehenden Ansprüche, **dadurch gekennzeichnet, dass** das Schleif-Sägeblatt (2) mittels zweier voneinander beabstandet angeordneter Bandsägerollen (4, 4') geführt ist.

14. Vorrichtung nach Anspruch 13, **dadurch gekennzeichnet, dass** wenigstens einer Bandsägerolle (4, 4') ein Sensor (15) zur Erfassung der Relativposition der Bandsäge zur jeweiligen Bandsägerolle (4, 4') zugeordnet ist und in Abhängigkeit von der erfassten Relativposition über eine Anstell-Vorrichtung (16) die Neigung wenigstens einer Bandsägerolle (4, 4') selbsttätig nach Maßgabe eines Ist-Sollwert-Vergleichs regelbar ist.

15. Vorrichtung nach einem der vorhergehenden Ansprüche, **dadurch gekennzeichnet, dass** dem mittels der Bandsägerollen (4, 4') angetriebenen umlaufenden Schleif-Sägeblatt (2) eine Vortriebs-Kontrollvorrichtung und/oder eine Rücklauf-Sperre zugeordnet ist.

16. Vorrichtung nach einem der vorhergehenden Ansprüche, **dadurch gekennzeichnet, dass** das Schleif-Sägeblatt (2) in einem Sägerahmen zum Aufbau eines Säge-Gatters vertikal eingespannt ist.

## Claims

1. A device for cutting of materials, producing a thin saw kerf, **characterized in that** a preferably endless grinding saw blade (2) having a micro-tooth system (3) is used for cutting of materials, particularly of wood, wherein the micro-teeth (8, 8') of the micro-tooth system (3) are each provided with a cutting surface, wherein the micro-teeth (8, 8') of the micro-tooth system (3), which each follow one another in the cutting direction, are ground in such a manner that one blade (9) is arranged on the right and one blade (9') is arranged on the left, in each instance, alternately one after the other, so that the saw kerf (24) is processed by the micro-teeth (8, 8') alternately at the right and left cut edge, in each instance, wherein the micro-tooth system (3) of the grinding saw blade (2) is provided with micro-teeth (8, 8'), the tooth pitch of which is 0.5 to 2 mm, and the tooth height of which, defined by the tooth base that lies between the micro-teeth (8, 8'), is ≤ 1.5 mm.

2. The device according to claim 1, **characterized in that** the grinding saw blade (2) is designed with the teeth set in such a manner that in the cutting direction of the grinding saw blade (2), micro-teeth (8, 8') of the micro-tooth system (3) are arranged interleaved in relation to one another, in such a manner that the micro-teeth (8, 8') project alternately to the right and the left beyond the grinding saw blade (2).

3. The device according to any one of the preceding claims, **characterized in that** the micro-teeth (8, 8') of the micro-tooth system (3) are angled in relation to the grinding saw blade (2) in such a manner that in the operating state, an obtuse cutting angle (β) of preferably 40° to 60° in relation to the surface of the material to be cut is set.

4. The device according to any one of the preceding claims, **characterized in that** the projection of the tooth blades (9, 9') of the micro-tooth system (3) in relation to the grinding saw blade (2) is only a few tenths of millimeters, preferably 1/10 mm.

5. The device according to any one of the preceding claims, **characterized in that** the saw blade thickness is between 0.1 and 0.5 mm.

6. The device according to claim 5, **characterized in that** the saw blade ends are connected to one another, on the face side, by means of a tooth system, preferably by means of a dovetail tooth system (17), and preferably connected by material bonding by means of a laser weld seam.

7. The device according to any one of the preceding claims, **characterized in that**, in the intended installation state, a blowing device (11) is assigned to the exit of the micro-tooth system (3) from the saw kerf (24) of the material to be cut, in such a manner that the micro-tooth system (3) is impacted by means of a water-air mixture.

8. The device according to claim 7, **characterized in that** a further blowing device (12) is assigned to the saw blade back of the grinding saw blade (2), in such a manner that a water-air mixture can be pressed into the saw kerf (24) of the material to be cut, preferably at high pressure.

9. The device according to claim 7 or 8, **characterized in that** the blowing devices (11, 12) are assigned a common control unit and/or a supply unit and pump unit for charging them with the water-air mixture.

10. The device according to any one of preceding claims 7 to 9, **characterized in that** a collection device (13) for collecting a water-sawdust mixture is arranged in the emission direction of the water-air mixture applied by means of the blowing device(s) (11, 12), wherein a filter element is connected downstream of this collection device (13).

11. The device according to any one of the preceding claims, **characterized in that** a belt conveyor or chain conveyor for supplying the material to be cut is assigned to the saw mill comprising the grinding saw blade (2) having the micro-tooth system (3), wherein the belt or chain conveyor is additionally provided with vacuum nozzles (22) in such a manner that the workpiece (5) to be processed can be fixed in place by means of a partial vacuum, and subsequently can be moved in relation to the saw blade (2) by means of the belt or chain conveyor.

12. The device according to claim 11, **characterized in that** the roller or chain conveyor has a charging belt (10), in each instance, for transport of the material to be cut, wherein a pivot mechanism for adjusting the inclination angle of the charging belt (10) is assigned to this charging belt (10), in such a manner that the entry angle of the micro-tooth system (3) into the workpiece (5) to be processed is continuously adjustable in a range of 60° to 90°

13. The device according to any one of the preceding claims, **characterized in that** the grinding saw blade (2) is guided by means of two band saw rollers (4, 4') that are arranged spaced apart from one another.

14. The device according to claim 13, **characterized in that** a sensor (15) for detecting the relative position of the band saw in relation to the respective band saw roller (4, 4') is assigned to at least one band saw roller (4, 4'), and the inclination of at least one band saw roller (4, 4') can be automatically regulated via an angle adjustment device (16), as determined by an actual value-reference value comparison.

15. The device according to any one of the preceding claims, **characterized in that** the circulating grinding saw blade (2) driven by means of the band saw rollers (4, 4') has a forward movement monitoring device and/or a reverse movement stop assigned to it.

16. The device according to any one of the preceding claims, **characterized in that** the grinding saw blade (2) is vertically clamped in a saw frame, to construct a saw gate.

## Revendications

1. Dispositif pour découper un matériau avec un trait de coupe fin, **caractérisé en ce qu'**une lame de scie abrasive (2) avec une microdenture (3) est utilisée pour la découpe d'un matériau, en particulier de bois, les microdents (8, 8') de la microdenture (3) étant munies chacune d'une surface de coupe, les microdents (8, 8') successives de la microdenture (3) étant affûtées de telle façon qu'un tranchant (9) soit orienté à droite et un tranchant à gauche (9') successivement en alternance sur les microdents (8, 8') de sorte que le trait de coupe (24) est travaillé par les microdents (8, 8') alternativement sur le bord de coupe de droite et de gauche, la microdenture (3) de la lame de scie abrasive (2) étant munie de microdents (8, 8') dont le pas est de 0,5 à 2 mm et dont la hauteur de dent définie par le fond de dent situé entre les microdents (8, 8') est ≤ 1,5 mm.

2. Dispositif selon la revendication 1, **caractérisé en ce que** la lame de scie abrasive (2) est croisée de telle manière que les microdents (8, 8') de la microdenture (3) successives dans le sens de coupe de la lame de scie abrasive (2) soient disposées en se croisant de telle façon que les microdents (8, 8') dépassent alternativement à droite et à gauche par-dessus la lame de scie abrasive (2).

3. Dispositif selon l'une des revendications précédentes, **caractérisé en ce que** les microdents (8, 8') de la microdenture (3) sont inclinées par rapport à la lame de scie abrasive (2) de telle manière que dans l'état de fonctionnement, un angle de coupe (β) obtus de 40° à 60°, de préférence, s'établisse par rapport au matériau à découper.

4. Dispositif selon l'une des revendications précédentes, **caractérisé en ce que** le dépassement des tranchants des dents (9, 9') de la microdenture (3) par rapport à la lame de scie abrasive (2) n'est que de quelques centièmes de millimètre, de préférence de 1/10^{e} de millimètre.

5. Dispositif selon l'une des revendications précédentes, **caractérisé en ce que** l'épaisseur de la lame de scie est comprise entre 0,1 et 0,5 mm.

6. Dispositif selon la revendication 5, **caractérisé en ce que** les extrémités de la lame de scie sont reliées entre elles par solidarité de matière au moyen d'une denture, de préférence au moyen d'une denture en queue d'aronde (17), de préférence au moyen d'une soudure par laser.

7. Dispositif selon l'une des revendications précédentes, **caractérisé en ce que** dans l'état d'installation prévu, un dispositif de soufflage (11) est disposé à l'endroit où la microdenture (3) sort du trait de coupe (24) du matériau à découper, de telle manière que la microdenture (3) soit exposée à un mélange d'eau et d'air.

8. Dispositif selon la revendication 7, **caractérisé en ce que** le dos de la lame de scie abrasive (2) est associé à un autre dispositif de soufflage (12) de telle manière qu'un mélange d'eau et d'air, de préférence sous haute pression, puisse être injecté dans le trait de coupe (24) du matériau à découper.

9. Dispositif selon la revendication 7 ou 8, **caractérisé en ce que** les dispositifs de soufflage (11, 12) sont associés à une unité de commande et/ou une unité d'alimentation et une unité de pompe communes pour leur chargement avec le mélange d'eau et d'air.

10. Dispositif selon l'une des revendications 7 à 9, **caractérisé en ce qu'**il est prévu dans le sens de projection du mélange d'eau et d'air appliqué au moyen du ou des dispositifs de soufflage (11, 12) une dispositif de récupération (13) pour recevoir un mélange d'eau et de sciure, ce dispositif de récupération (13) étant suivi d'une unité de filtre.

11. Dispositif selon l'une des revendications précédentes, **caractérisé en ce que** la lame de scie abrasive (2) avec la scie comprenant la microdenture (3) est associée à un convoyeur à courroie ou à chaîne pour transporter le matériau à découper, lequel convoyeur à bande ou à chaîne est en outre muni de buses à vide (22) de telle façon que la pièce d'oeuvre (5) puisse être fixée au moyen d'une dépression puis déplacée au moyen du convoyeur à bande ou à chaîne par rapport à la lame de scie (2).

12. Dispositif selon la revendication 11, **caractérisé en ce que** le convoyeur à rouleaux ou à chaîne comprend une bande de chargement (10) pour le transport du matériau à découper, cette bande de chargement (10) étant associé à un mécanisme de basculement pour le réglage de l'angle d'inclinaison de la bande de chargement (10) de telle sorte que l'angle de pénétration de la microdenture (3) dans la pièce d'oeuvre (5) soit réglable en continu sur une plage de 60° à 90°.

13. Dispositif selon l'une des revendications précédentes, **caractérisé en ce que** la lame de scie abrasive (2) est guidée au moyen de deux galets de lame de scie (4, 4') disposés à distance l'un de l'autre.

14. Dispositif selon la revendication 13, **caractérisé en ce qu'**au moins un galet de lame de scie (4, 4') est associé à un capteur (15) pour détecter la position relative de la scie à ruban par rapport au galet de lame de scie (4, 4') et l'inclinaison d'au moins un galet de lame de scie (4, 4') peut être réglée automatiquement par un dispositif d'orientation (16) en fonction de la position relative détectée selon une comparaison entre valeur réelle et valeur de consigne.

15. Dispositif selon l'une des revendications précédentes, **caractérisé en ce qu'**un dispositif de contrôle de l'avancement et/ou un barrage antiretour sont associés à la lame de scie abrasive (2) continue entraînée au moyen des galets de lame de scie (4, 4').

16. Dispositif selon l'une des revendications précédentes, **caractérisé en ce que** la lame de scie abrasive (2) est tendue verticalement dans un bâti de scie pour former un châssis de sciage.
